# EUROPÄISCHE PATENTANMELDUNG

(11) **EP 4 847 477 A1**
(43) Veröffentlichungstag der Anmeldung: **02.12.2026**
(21) Anmeldenummer: 25179502.7
(22) Anmeldetag: 28.05.2025
(51) Int. Cl.: C04B 40/06

(54) **ZWEI- ODER MEHRKOMPONENTENSYSTEM ZUR AUSBILDUNG EINER SCHNELL AUSHÄRTENDEN BESCHICHTUNG**

(71) Anmelder: DAW SE, 64372 Ober-Ramstadt (DE)
(72) Erfinder: Hurnaus, Thomas, 84559 Krainburg (DE); Fleischmann, Konstantin, 99817 Eisenach (DE); Rupprecht, Daniel, 99834 Gerstungen (Förtha) (DE); Gille, Michael, 99976 Lengenfeld unterm Stein (DE); Lingelbach, Heike, 63110 Rodgau (DE)
(74) Vertreter: Michalski Hüttermann & Partner mbB

(57) **Zusammenfassung**

Die vorliegende Erfindung bezieht sich auf ein Zwei- oder Mehrkomponentensystem, wobei eine erste Zusammensetzung, welche Zement enthält, mit einer zweiten pastösen basischen Masse vermischt wird.

## Beschreibung

Die vorliegende Erfindung bezieht sich auf Zusammensetzungen oder Systeme enthaltend derartige Zusammensetzungen zur Ausbildung einer schnell aushärtenden Beschichtung, insbesondere zur Ausbildung einer schnell aushärtenden, durchtrocknenden Beschichtung, insbesondere einem Unterputz, Oberputz, Grundierung und Farbe, auf einem bauseitigen Untergrund und/oder Bauelement.

Bei derartigen Zusammensetzungen, welche üblicherweise Zement enthalten, stellt sich das Problem, dass zum einen die Komponenten, die die Beschichtung ausmachen, lagerstabil sein sollen, zum anderen eine schnelle Aushärtung erzielt werden soll.

Üblicherweise wird meist so vorgegangen, dass in einem Mehrkomponentensystem eine erste pastöse Masse, welche einen Zement und weitere Additive enthält, mit einem Aktivator vermischt wird, meist Alkalilauge. Dies bereitet in der Praxis jedoch oftmals die folgenden Probleme:
- Die pastöse Komponente, welche den Flüssigzement enthält, weist bei den meisten Anwendungen eine sehr geringe Lagerstabilität auf. So führt bereits der Metallkontakt zur Auslösung der Reaktion des Flüssigzements, wodurch sich die Zahl der möglichen Anwendungen deutlich verringert.
- Weiterhin ist durch das Mischen der pastösen Komponente mit dem sehr flüssigen Aktivator die Gefahr von Ausblühungen gegeben. Dies limitiert häufig die Anwendung auf optisch nicht sichtbare pastöse Massen (vornehmlich auf Klebe- und Armiermassen).
- Ein drittes Problem stellt in der Praxis oftmals die Bereitstellung der Mischung aus Aktivator und pastöse Masse dar. Der Aktivator - meist eine Base - wird bei vielen Anwendungen an der Düse oder im Düsenbereich mit der pastösen Grundmasse gemischt. Aufgrund der stark unterschiedlichen Viskositäten (pastös vs. flüssig) neigt der Aktivator jedoch an der Düse zu einer schlechten Mischung mit der pastösen Masse, so dass der Aktivator teilweise über die Düse auch als Aerosol in die Luft verteilt wird. Der stark alkalische Aktivator kann dann sehr reizend wirken, was z.B. bei Anwendungen in geschlossenen Räumen nicht wünschenswert ist.

Es stellt sich somit die Aufgabe, neuartige Zusammensetzungen zu schaffen, die die genannten Nachteile zumindest teilweise überwinden. Demgemäß wird ein Zwei - oder Mehrkomponentensystem vorgeschlagen, umfassend eine erste Zusammensetzung umfassend eine zementhaltige Suspension sowie eine zweite Zusammensetzung umfassend eine Base, wobei die zweite Zusammensetzung als pastöse Masse vorliegt.

Es hat sich herausgestellt, dass so bei vielen Anwendungen eine schnell aushärtende Beschichtung erreicht werden kann, bei gleichzeitig guter Handhabung der einzelnen Komponenten. Die so erzielte Beschichtung verfügt neben der schnellen Verfügbarkeit aufgrund der oftmals schnellen Aushärtbarkeit bei vielen Anwendungen weiterhin über ausgezeichnete Eigenschaften wie geringe Wasseraufnahme und Schwindung, aber hohe Haftzugfestigkeit und Wasserdampfdurchlässigkeit.

Die vorliegende Erfindung bezieht sich außerdem auf die Verwendung einer pastösen Masse, umfassend eine Base, zur Aktivierung von Zement. Dabei können alle vorteilhaften Ausgestaltungen, wie sie im Folgenden für die zweite Zusammensetzung beschrieben werden, *mutatis mutandis* zur Anwendung kommen.

Besonders bevorzugt ist außerdem die Verwendung einer pastösen Masse, umfassend eine Base zur Verwendung als Putzbeschichtungsmasse und/oder Klebe- und Fugenmörtel auf einer Innenwand oder einer Fassade, vorzugsweise einem Wärmedämmmaterial und/oder für die Verwendung in der Vorfabrikation für Gebäude oder Gebäudeteilen.

Weiterhin bevorzugt ist die Verwendung einer pastösen Masse, umfassend eine Base, zur Aktivierung von Zement und zur Verwendung als Putzbeschichtungsmasse und/oder Klebe- und Fugenmörtel auf einer Innenwand oder einer Fassade, vorzugsweise einem Wärmedämmmaterial und/oder für die Verwendung in der Vorfabrikation für Gebäude oder Gebäudeteilen.

Die einzelnen Bestandteile des Systems werden im Folgenden vorgestellt, wobei alle Ausgestaltungen und vorteilhaften Ausführungsformen *ad libitum* miteinander kombinierbar sind.

### Zwei- oder Mehrkomponentensystem

Die Komponenten des erfindungsgemäßen Systems werden bauseits gemäß der meisten Anwendungen erst kurz vor dem Auftragen vermischt. Das heißt, dass die Lagerung der Komponenten üblicherweise getrennt voneinander erfolgt, wobei sich jede der beiden Komponenten als lagerstabil erweist. Erst nach dem Mischen der beiden Komponenten setzt die Härtungsreaktion ein.

Gemäß einer bevorzugten Ausführungsform der Erfindung wird die erste Zusammensetzung in einem Anteil von ≥ 3 % bis ≤ 15 % (Gew. erste Zusammensetzung / Gew. zweite Zusammensetzung) verwendet. Bevorzugt ist der Anteil ≥ 5 % bis ≤ 10 %.

### Erste Zusammensetzung

Gemäß der Erfindung umfasst die erste Zusammensetzung eine zementhaltige Suspension. Bevorzugt umfasst die Suspension Calciumaluminatzement.

Vorzugsweise enthält die im Rahmen der vorliegenden Erfindung verwendete stabilisierte zementhaltige Suspension einen aluminösen Zement. "Aluminöser Zement" bedeutet in diesem Zusammenhang, dass der Zement Aluminium enthält, vorzugsweise in der Form von Calciumaluminat. Vorzugsweise enthält der Zement Alumiumiumoxid (Al₂O₃) und/oder Calciumoxid (CaO). In einer bevorzugten Ausführungsform kann der Zement außerdem Sulfate enthalten. Vorzugsweise enthält die stabilisierte zementhaltige Suspension daher Calciumoxid, Aluminiumoxid, Sulfate, oder Kombinationen davon.

In einer bevorzugten Ausführungsform enthält die stabilisierte zementhaltige Suspension daher einen Zement mit mindestens 1 Gew.-%, vorzugsweise mindestens 2 Gew.-%, besonders bevorzugt mindestens 3 Gew.-%, noch mehr bevorzugt mindestens 5 Gew.-%, noch mehr bevorzugt mindestens 10 Gew.-%, am meisten bevorzugt mindestens 20 Gew.-% Aluminium bis 60%, bevorzugt 40% Aluminium.

Die Zusammensetzung kann außerdem noch einen Stabilisator umfassen, ausgewählt aus einer anorganischen Säure, wobei Borsäure und/oder Phosphorsäure bzw. metaPhosphorsäure, Phosphonsäure, Phosphorsäure, Phosphonate und Verbindungen, die durch die Reaktion mit Wasser eine oder mehrere dieser Verbindungen bilden, besonders bevorzugt sind.

Gemäß einer bevorzugten Ausführungsform enthält die erste Zusammensetzung zwischen 0,1 Gew.-% und 20 Gew.-%, noch mehr bevorzugt zwischen 0,1 Gew.-% und 15 Gew.-%, noch mehr bevorzugt zwischen 0,1 Gew.-% und 10 Gew.-%, am meisten bevorzugt zwischen 0,3 Gew.-% und 10 Gew.-% an Stabilisatoren bezogen auf die Gesamtmasse der Zementbestandteile.

Gemäß einer bevorzugten Ausführungsform besteht die erste Zusammensetzung im Wesentlichen aus Wasser, Zement und ggf. Stabilisator.

Der Term "Im Wesentlichen" im Zusammenhang mit der vorliegenden Anmeldung bedeutet dabei > 95 % (Gew. /Gew.), bevorzugt > 98 % sowie am meisten bevorzugt > 99 %.

### Zweite Zusammensetzung

Gemäß der vorliegenden Erfindung umfasst die zweite Zusammensetzung eine Base und liegt als pastöse Masse vor.

Der Term "pastöse Masse" bedeutet und/oder umfasst insbesondere, dass die Zusammensetzung über eine Eindringtiefe von 300 PE bis 340 PE (1 PE = 1/10 mm) nach 10 s, bevorzugt 310 PE bis 330 PE, gemessen mittels Penetrometer PNR 12 (Fa. Anton Paar) bei einer Temperatur von 23°C, Eindringzeit 10 s, Edelstahlgefäß (Innendurchmesser: 70 mm, Innenhöhe: 45 mm), Fallstab nach ASTM D 2884 und Standard-Hohlkonus mit Spitze nach DIN 51580 verfügt.

Dies hat sich als vorteilhaft herausgestellt, da so in der Praxis eine gute Vermischung der ersten und zweiten Zusammensetzung erzielt werden kann und die oben genannten Nachteile (Ausblühungen und Aerosolbildung) weitgehend oder sogar je nach Anwendung gänzlich vermieden werden können.

Bevorzugte Basen sind dabei Alkali- und Erdalkalihydroxide, besonders bevorzugt sind Natrium-, Kalium- und Calciumhydroxid. Bevorzugt beträgt der Anteil an Base dabei zwischen ≥ 0,01 % und ≤ 1 % , bevorzugt zwischen ≥ 0,02 % und ≤ 0,5 % (Gew./Gew. der gesamten Zusammensetzung).

Gemäß einer bevorzugten Ausführungsform ist der pH-Wert der zweiten Zusammensetzung ≥ 10 und ≤ 13, bevorzugt ≥ 10,5 bis ≤ 12,5 sowie am meisten bevorzugt ≥ 11. Dies hat sich als vorteilhaft herausgestellt, da so eine schnelle Aushärtung des Zements erreicht werden kann.

Gemäß einer bevorzugten Ausführungsform enthält die zweite Zusammensetzung Füllstoff, bevorzugt zwischen ≥ 55 % und ≤ 90 %, bevorzugt ≥ 60 % und ≤ 75 % (Gew./Gew. der gesamten Zusammensetzung). Bevorzugte Füllstoffe sind dabei anorganische oxidische, carbonatische und silikatische Materialien, bevorzugt Dolomit/Dolomitmehl, Quarzmehl, Silikate (z. B. Glimmer, Feldspat), Calciumcarbonat, Magnesit, Aluminiumoxid oder Mischungen daraus. Es hat sich herausgestellt, dass so auf effektive Weise die gewünschte Viskosität bzw. Konsistenz der zweiten Zusammensetzung erreicht werden kann.

Gemäß einer bevorzugten Ausführungsform umfassen die Füllstoffe dabei Füllstoffe mit einer Schüttdichte oberhalb 1 g/m³ (bevorzugt aus den oben genannten Füllstoffen ausgewählt) sowie Füllstoffe mit einer Dichte unterhalb 1 g/m³ (Leichtfüllstoffe), wobei die Leichtfüllstoffe bevorzugt ausgewählt sind aus geeigneten Aluminosilikaten, Blähglas etc. Bevorzugt beträgt der Anteil an Leichtfüllstoff in der zweiten Zusammensetzung zwischen ≥ 1 % und ≤ 20 %, bevorzugt ≥ 5 % und ≤15 % (Gew. /Gew. der gesamten Zusammensetzung).

Gemäß einer bevorzugten Ausführungsform enthält die zweite Zusammensetzung ein organisches Bindemittel, bevorzugt zwischen ≥ 0,5 % und ≤ 40 %, bevorzugt ≥ 5 % und ≤ 15 % (Gew. /Gew. der gesamten Zusammensetzung). Dies hat sich als vorteilhaft herausgestellt, da so insbesondere die Lagerstabilität der zweiten Zusammensetzung verbessert werden kann.

Bevorzugte organische Bindemittel sind dabei Polymere, insbesondere auf Acryl-, Polyester, Vinylacetat, Polysiloxan, Ethylen oder Styrolbasis. Besonders bevorzugt ist Styrolacrylat.

Geeignete Bindemittel bzw. Bindemittelpolymere umfassen in einer vorteilhaften Ausführungsform mindestens ein Polysiloxanharz, insbesondere in Form einer Emulsion. Hierbei kann es sich zum Beispiel um Poly-(dialkylsiloxane) wie Poly(dimethylsiloxane) handeln.

In einer weiteren vorteilhaften Ausgestaltung werden, alternativ oder zusätzlich, als geeignete Bindemittel bzw. Bindemittelpolymere solche auf Basis der Monomere Carbonsäurevinylester mit 3 bis 20 C-Atomen, beispielsweise Vinylacetat und Vinylpropionat, N-Vinylpyrrolidon und dessen Derivate, Vinylaromaten, beispielsweise Styrol und deren Derivate, Vinylhalogeniden, ethylenisch ungesättigten Carbonsäuren, beispielsweise Acryl- und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden eingesetzt, vorzugsweise in Form von Polymerdispersionen. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestern ((Meth)acrylaten) handeln. Unter dem Begriff (Meth)acrylat bzw. (Meth)acrylsäure werden im Sinne der Erfindung und im Einklang mit anerkannter Notation sowohl Methacrylate bzw. Methacrylsäure als auch Arylate bzw. Acrylsäure subsumiert. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure.

Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet. In diesem Zusammenhang sind solche Bindemittel bzw. Bindemittelpolymere besonders geeignet, die in Wasser nicht oder nur mäßig quellbar sind. In einer zweckmäßigen Ausgestaltung liegt das Bindemittel bzw. das Bindemittelpolymer oder eine Komponente des Bindemittels in Form einer Polymerdispersion, d.h. in Form einer wässrigen Dispersion vor. Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden. Beispielhaft seien als geeignete Alkylester der Acrylsäure und der Methacrylsäure, Methylacrylat, Ethylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, iso-Butylmethacrylat, 2-Ethylhexylmethacrylat, Cyclohexylmethacrylat und Cyclohexylacrylat genannt. Diese Alkylester können selbstverständlich sowohl alleine als auch in Form einer Kombination von zwei oder mehreren Alkylestern verwendet werden. Zusätzlich oder anstelle können auch mit funktionellen Gruppen, beispielsweise mit Hydroxyl- oder mit Epoxygruppen funktionalisierte Alkylester der Acrylsäure und/oder der Methacrylsäure eingesetzt werden. Geeignete hydroxygruppenhaltige (Meth)acrylsäureester umfassen Hydroxymethylmethacrylat, Hydroxyethylacrylat, Hydroxypropylmethacrylat, Hydroxypropylacrylat, Hydroxybutylmethacrylat und Hydroxybutylacrylat.

Diese Alkylester können sowohl alleine als auch in Kombination eingesetzt werden. Als epoxygruppenhaltige (Meth)acrylsäureester sei exemplarisch auf Glycidylmethacrylat und Glycidylacrylat verwiesen. Zusätzlich können als Comonomere zu der Acrylsäure, der Methacrylsäure und/oder den Estern, insbesondere Alkylestern, der (Meth)acrylsäure weitere ungesättigte Monocarbonsäuren sowie deren Anhydride und/oder insbesondere ungesättigte Dicarbonsäuren eingesetzt werden. Als geeignete ungesättigte Dicarbonsäuren kommen zum Beispiel Maleinsäure, Fumarsäure, Itaconsäure und Citraconsäure sowie deren Halbester, beispielsweise mit C1-C12-Alkoholen in Betracht.

Das organische Bindemittel liegt in einer bevorzugten Ausgestaltung in Form einer Bindemitteldispersion, insbesondere in Form einer Styrolacrylatcopolymerdispersion, vor. Geeignete Polyvinylacetatdispersionen umfassen u.a. solche mit äußerer Weichmachung, z.B. mit Dibutylenhexylenglycol, und auch solche mit innerer Weichmachung. In letzterem Fall liegt das Polyvinylacetat als Copolymerisat vor, beispielsweise mit Vinylestern, Maleinaten, Fumaraten, Acrylaten oder Ethylen, oder als Terpolymerisat mit Ethylen und Vinylchlorid. Geeignete Polyvinylpropionatdispersionen nutzen Polyvinylpropionat z.B. als Homopolymerisat oder als Copolymerisat, beispielsweise mit Acrylaten. In geeigneten Polystyroldispersionen liegt Polystyrol z.B. als Homopolymerisat oder als Copolymerisat vor. Styrolcopolymerisate sind bevorzugt, z.B. solche mit Acrylaten oder Butadien. Besonders bevorzugt sind Stryrolacrylatcopolymerisate für den Einsatz als Bindemitteldispersion. Geeignete Polyacrylate können z.B. Homo- wie auch Copolymerisate umfassen. In bevorzugten Copolymerisaten kommt Acrylsäure und/oder Methacrylsäure sowie deren Ester zum Einsatz.

Gemäß einer bevorzugten Ausführungsform enthält die zweite Zusammensetzung ein Beschleunigungsmittel, bevorzugt zwischen ≥ 0,01 % und ≤ 5 %, bevorzugt ≥ 0,05 % und ≤ 2 % (Gew./Gew. der gesamten Zusammensetzung). Unter "Beschleunigungsmittel" werden insbesondere Substanzen verstanden, die in der Lage sind, die Aushärtung zu aktivieren und insbesondere zu beschleunigen. Besonders bevorzugte Beschleunigungsmittel sind lithiumhaltige anorganische Verbindungen, insbesondere ausgewählt aus Lithiumhydroxid, Lithiumcarbonat und /oder Lithiumsulfat.

Gemäß einer bevorzugten Ausführungsform beträgt der Anteil an Wasser in der zweiten Zusammensetzung zwischen ≥ 1 % und ≤ 50 %, bevorzugt ≥ 5 % und ≤ 15 % (Gew./Gew. der gesamten Zusammensetzung).

Gemäß einer bevorzugten Ausführungsform enthält die zweite Zusammensetzung einen Aktivator, bevorzugt zwischen ≥ 0,5 % und ≤ 5 %, bevorzugt ≥ 1 % und ≤ 2 % (Gew. /Gew. der gesamten Zusammensetzung). Unter "Aktivator" werden insbesondere Substanzen verstanden, die kristallin oder teilkristallin vorliegen und somit als Kristallkeime dienen können, um die Aushärtung zu beschleunigen.

Besonders bevorzugte Beschleunigungsmittel sind Calciumsilikate und/oder Calcium-Silikat-Hydrate (CSH Minerale), bevorzugt Circolit /Xonotlit (6 CaO x 6 SiO₂ x H₂O)

Gemäß einer bevorzugten Ausführungsform weist die zweite Zusammensetzung folgende Bestandteile auf (wobei sich die einzelnen Bestandteile maximal zu 100% addieren):
- ≥ 55 % und ≤ 90 % Füllstoff
- ≥ 0,5 % und ≤ 40 % organisches Bindemittel
- ≥ 0,01 % und ≤ 5 % Beschleunigungsmittel
- ≥ 0,01 % und ≤ 1 % Base
- ≥ 0,5 % und ≤ 5 % Aktivator
- ≥ 1 % und ≤ 50 % Wasser

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung des erfindungsgemäßen Beispiels, welches rein als illustrativ und nicht als beschränkend anzusehen ist.

### Beispiel I:

Beispiel I bezieht sich auf ein Zweikomponentensystem mit den folgenden beiden Zusammensetzungen:
Zusammensetzung I: passivierter Calciumaluminatzement in wässriger, stabilisierter Suspension ("EXALT 60H" Fa. Imerys)
Zusammensetzung II: Pastöse Masse mit den folgenden Bestandteilen (Gew%)

| Bestandteil | Anteil in Gew-% |
|---|---|
| Füllstoff | 69 |
| Leichtfüllstoff | 5 |
| Base | 0,03 |
| Aktivator | 2 |
| Organisches Bindemittel | 7,5 |
| Dispergiermittel | 0,5 |
| Beschleuniger | 0,15 |
| Wasser | auf 100 |

Der pH der Zusammensetzung II (bestimmt nach DIN EN ISO 19396-1) betrug 11,60, die Eindringtiefe (gemessen wie oben beschrieben) 326 PE.

8,5g der Zusammensetzung I wurden mit 100g der Zusammensetzung II vermischt. Man erhielt eine Masse mit einen pH-Wert von 10,68 und eine Eindringtiefe von 339 PE. Danach ließ man die entstandene Mischung 28 Tage aushärten, anschließend wurde das entstandene System untersucht.

Man erhielt folgende Werte:

| **Parameter** | **Wert** | **Messmethode** |
|---|---|---|
| Wasseraufnahme [kg/m²] | 0,22 | EAD |
| Wasserdurchlässigkeit [kg/m²h^{0,5}] | 0,082 | DIN EN 1062-3 |
| Wasserdampfdiffusionsäquivalente Luftschichtdicke [m] | 0,074 | DIN EN ISO 7783 |
| Haftzugfestigkeit EPS trocken [kPa] | 151 | EAD |
| Haftzugfestigkeit EPS nass [kPa] | 149 | EAD |
| Biegezugfestigkeit [N/mm²] | 1,43 | DIN EN 1015-11 |
| Druckfestigkeit [N/mm²] | 3,05 | DIN EN 1015-11 |
| Schwindung [mm/m] | -1,4 | DIN 52450 |

Wie gut zu sehen, wurde ein System mit exzellenten Eigenschaften erhalten.

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

## Patentansprüche

1. Zwei - oder Mehrkomponentensystem, umfassend eine erste Zusammensetzung umfassend eine zementhaltige Suspension sowie eine zweite Zusammensetzung umfassend eine Base, wobei die zweite Zusammensetzung als pastöse Masse vorliegt.

2. Zwei- oder Mehrkomponentensystem gemäß Anspruch 1, wobei die zweite Zusammensetzung eine Eindringtiefe von 300 PE bis 340 PE (1 PE = 1/10 mm) nach 10 s, gemessen mittels Penetrometer PNR 12 (Fa. Anton Paar) bei einer Temperatur von 23°C, Eindringzeit 10s, Edelstahlgefäß (Innendurchmesser: 70 mm, Innenhöhe: 45 mm), Fallstab nach ASTM D 2884 und Standard-Hohlkonus mit Spitze nach DIN 51580, aufweist.

3. Zwei- oder Mehrkomponentensystem gemäß Anspruch 1 oder 2, wobei der pH-Wert der zweiten Zusammensetzung ≥ 10 und ≤ 13 beträgt.

4. Zwei- oder Mehrkomponentensystem gemäß einem der Ansprüche 1 bis 3, wobei die Base ausgewählt ist aus Alkali- und Erdalkalihydroxiden.

5. Zwei- oder Mehrkomponentensystem gemäß einem der Ansprüche 1 bis 4, wobei die zweite Zusammensetzung Füllstoff enthält.

6. Zwei- oder Mehrkomponentensystem gemäß einem der Ansprüche 1 bis 5, wobei die zweite Zusammensetzung zwischen ≥ 55 % und ≤ 90 % Füllstoff (Gew /Gew der gesamten Zusammensetzung) enthält.

7. Zwei- oder Mehrkomponentensystem gemäß einem der Ansprüche 1 bis 5, wobei die zweite Zusammensetzung ein organisches Bindemittel enthält.

8. Zwei- oder Mehrkomponentensystem gemäß einem der Ansprüche 1 bis 7, wobei die zweite Zusammensetzung ≥ 0,5 % und ≤ 40 % (Gew /Gew der gesamten Zusammensetzung) organisches Bindemittel enthält.

9. Zwei- oder Mehrkomponentensystem gemäß einem der Ansprüche 1 bis 8, wobei die zweite Zusammensetzung ein Beschleunigungsmittel enthält.

10. Zwei- oder Mehrkomponentensystem gemäß einem der Ansprüche 1 bis 9, wobei die zweite Zusammensetzung ≥ 0,01 % und ≤ 5 % (Gew /Gew der gesamten Zusammensetzung) Beschleunigungsmittel enthält.

11. Zwei- oder Mehrkomponentensystem gemäß einem der Ansprüche 1 bis 10, wobei das Beschleunigungsmittel ausgewählt ist aus lithiumhaltigen anorganischen Verbindungen.

12. Zwei- oder Mehrkomponentensystem gemäß einem der Ansprüche 1 bis 11, wobei die zweite Zusammensetzung einen Aktivator enthält.

13. Zwei- oder Mehrkomponentensystem gemäß einem der Ansprüche 1 bis 12, wobei die erste Zusammensetzung im Wesentlichen aus Wasser, Zement und ggf. Stabilisator besteht

14. Zwei- oder Mehrkomponentensystem gemäß einem der Ansprüche 1 bis 13, wobei die erste Zusammensetzung in einem Anteil von ≥ 3 % bis ≤ 15 % (Gew. erste Zusammensetzung / Gew. zweite Zusammensetzung) verwendet wird.

15. Verwendung einer pastösen Masse, umfassend eine Base, zur Aktivierung von Zement, insbesondere zur Verwendung als Putzbeschichtungsmasse und/oder Klebe- und Fugenmörtel auf einer Innenwand oder einer Fassade, vorzugsweise einem Wärmedämmmaterial und/oder für die Verwendung in der Vorfabrikation für Gebäude oder Gebäudeteilen.
